# EUROPEAN PATENT APPLICATION

(11) **EP 4 339 337 A1**
(43) Date of publication of application: **20.03.2024**
(21) Application number: 22807408.4
(22) Date of filing: 06.05.2022
(51) Int. Cl.: C25B 15/08, B01D 61/00, C01B 3/02, C25B 1/04, C25B 9/00

(54) **HYDROGEN PRODUCTION SYSTEM AND HYDROGEN PRODUCTION METHOD**

(30) Priority: 12.05.2021 JP 2021081018
(71) Applicant: IHI Corporation, Tokyo 135-8710 (JP)
(72) Inventor: OHARA Hiroaki, Tokyo 135-8710 (JP)
(74) Representative: TBK
(86) International application number: PCT/JP2022/019559
(87) International publication number: WO 2022/239706

(57) **Abstract**

Provided is a hydrogen production system (1) including at least one first osmosis device (10), a circulation flow path (20), and an alkaline water electrolyzer (30). The at least one first osmosis device (10) includes a semipermeable membrane (11) which separates a first chamber (12) to which water to be treated is supplied and a second chamber (13) to which an alkaline aqueous solution having a higher osmotic pressure than that of the water to be treated is supplied, and which permeates water in the water to be treated from the first chamber (12) to the second chamber (13). The circulation flow path (20) is connected to the second chamber (13) and the alkaline aqueous solution is circulated therethrough. The alkaline water electrolyzer (30) is provided in the circulation flow path (20), and electrolyzes water in an alkaline aqueous solution supplied from the second chamber (13) and produces hydrogen.

## Description

### TECHNICAL FIELD

The present invention relates to a hydrogen production system and a hydrogen production method.

### BACKGROUND ART

Carbon dioxide has been regarded as a cause of global warming, and there has been a worldwide movement to curb carbon dioxide emissions. Hydrogen is attracting attention as an alternative to fossil fuels because it does not emit carbon dioxide when used and can also be obtained by electrolyzing water using renewable energy.

As a method for electrolyzing water to produce hydrogen, an alkaline water electrolysis method, a solid polymer water electrolysis method, and a solid oxide water electrolysis method are known. Among these, a device for producing hydrogen using an alkaline water electrolysis method is attracting attention because electrolyzers are inexpensive. An alkaline water electrolyzer described in Patent Literature 1 is known as a device for electrolyzing water using an alkaline water electrolysis method.

### CITATION LIST

### PATENT LITERATURE

Patent Literature 1: WO 2019/181662

### SUMMARY OF THE INVENTION

In recent years, the use of hydrogen as a fuel has become widespread, and the demand for hydrogen is expected to increase. However, alkaline water electrolyzers operate in a closed system. Hence, if seawater, brackish water, or fresh water is used as alkaline water for electrolysis as it is from a water source, ionic components in the water are concentrated through electrolysis, and salts precipitate in alkaline water electrolyzers, which may adversely affect the electrolysis. It is thus preferable to utilize water that contains substantially no ionic components, such as pure water, for the alkaline water to be used in alkaline water electrolyzers. Meanwhile, pure water can be obtained by distilling water from a water source, but when water for alkaline water electrolysis is produced using such a method, it is necessary to boil the water from the water source. However, boiling of water uses fossil fuels, and thus the amount of carbon dioxide emissions may become larger.

Thus, an object of the present invention is to provide a hydrogen production system and a hydrogen production method capable of producing hydrogen with a reduction in the amount of carbon dioxide emissions compared with the case where water required for alkaline water electrolysis is produced using a distillation method.

A hydrogen production system according to the present disclosure includes at least one first osmosis device, a circulation flow path, and an alkaline water electrolyzer. The at least one first osmosis device includes a semipermeable membrane which separates a first chamber to which water to be treated is supplied and a second chamber to which an alkaline aqueous solution having a higher osmotic pressure than that of the water to be treated is supplied, and which permeates water in the water to be treated from the first chamber to the second chamber. The circulation flow path is connected to the second chamber and the alkaline aqueous solution is circulated therethrough. The alkaline water electrolyzer is provided in the circulation flow path, and electrolyzes water in an alkaline aqueous solution supplied from the second chamber and produces hydrogen.

The water to be treated may be seawater or brackish water.

The alkaline water electrolyzer may include an anode chamber that houses an anode, a cathode chamber that houses a cathode, and a separation membrane that separates the anode chamber and the cathode chamber.

The circulation flow path may include a flow path connected to an outlet of the second chamber and to an inlet of the anode chamber and an inlet of the cathode chamber.

The hydrogen production system may further include an oxygen gas-liquid separator that is connected to the anode chamber and separates oxygen produced through electrolysis at the anode from an alkaline aqueous solution. The hydrogen production system may further include a hydrogen gas-liquid separator that is connected to the cathode chamber and separates hydrogen produced through electrolysis at the cathode from an alkaline aqueous solution. An alkaline aqueous solution to be supplied to the second chamber includes an alkaline aqueous solution separated by the oxygen gas-liquid separator and an alkaline aqueous solution separated by the hydrogen gas-liquid separator.

The hydrogen production system may further include a first tank provided upstream of the second chamber and downstream of the alkaline water electrolyzer in the circulation flow path. The hydrogen production system may further include a second tank provided downstream of the second chamber and upstream of the alkaline water electrolyzer in the circulation flow path. The salt concentration of the alkaline aqueous solution in the first tank may be higher than that of the alkaline aqueous solution in the second tank.

The hydrogen production system may further include a heat exchanger that exchanges heat of an alkaline aqueous solution to be supplied to the alkaline water electrolyzer with heat of an alkaline aqueous solution discharged from the alkaline water electrolyzer.

The at least one first osmosis device may include a plurality of first osmosis devices. The hydrogen production system may further include a treated water flow path through which the water to be treated flows. The treated water flow path may include a plurality of first parallel flow paths that are each connected to first chambers of the first osmosis devices and are arranged in parallel. The circulation flow path may include a plurality of second parallel flow paths that are each connected to second chambers of the first osmosis devices and are arranged in parallel. A first stop portion may be provided upstream of each of the first chambers in each of the plurality of first parallel flow paths, the first stop portion stopping supply of the water to be treated to the first chamber. A second stop portion may be provided upstream of each of the second chambers in each of the plurality of second parallel flow paths, the second stop portion stopping supply of the alkaline aqueous solution to the second chamber.

The hydrogen production system may further include a first turbine that is provided downstream of the second chamber and upstream of the alkaline water electrolyzer in the circulation flow path and is rotated using an alkaline aqueous solution supplied from the second chamber. The hydrogen production system may further include a first generator that generates electricity by means of rotation of the first turbine.

The hydrogen production system may further include a treated water flow path which is connected to the first chamber and through which the water to be treated flows. The hydrogen production system may further include a second osmosis device including a semipermeable membrane which separates a third chamber provided downstream of the first chamber in the treated water flow path and a fourth chamber to which low osmotic pressure water having an osmotic pressure less than that of the water to be treated is supplied, and which permeates water in the low osmotic pressure water from the fourth chamber to the third chamber. The hydrogen production system may further include a second turbine which is provided in the treated water flow path and is rotated using water passing through the third chamber. The hydrogen production system may further include a second generator which generates electricity by means of rotation of the second turbine.

A hydrogen production method according to the present disclosure includes a step of allowing water in water to be treated to permeate a semipermeable membrane to be supplied to an alkaline aqueous solution having a higher osmotic pressure than that of the water to be treated. The method includes a step of electrolyzing, by an alkaline water electrolyzer, water in the alkaline aqueous solution to which the water in the water to be treated is supplied, and obtaining hydrogen. The method includes a step of supplying an alkaline aqueous solution remaining after electrolysis to the semipermeable membrane as an alkaline aqueous solution having a higher osmotic pressure than that of the water to be treated.

According to the present disclosure, it is possible to provide a hydrogen production system and a hydrogen production method capable of producing hydrogen with a reduction in the amount of carbon dioxide emissions compared with the case where water required for alkaline water electrolysis is produced using a distillation method.

### BRIEF DESCRIPTION OF DRAWINGS

[FIG. 1] FIG. 1 is a schematic diagram illustrating a hydrogen production system according to one embodiment.
[FIG. 2] FIG. 2 is a schematic diagram illustrating an example in which a heat exchanger is provided in a flow path connected to an alkaline water electrolyzer.
[FIG. 3] FIG. 3 is a graph illustrating a relationship under predetermined conditions between the osmotic pressure of an aqueous solution of potassium hydroxide and the osmotic pressure of seawater.
[FIG. 4] FIG. 4 is a schematic diagram illustrating an example of the hydrogen production system including multiple first osmosis devices.
[FIG. 5] FIG. 5 is a schematic diagram illustrating a hydrogen production system according to one embodiment.
[FIG. 6] FIG. 6 is a schematic diagram illustrating a hydrogen production system according to one embodiment.
[FIG. 7] FIG. 7 is a schematic diagram illustrating a hydrogen production system according to one embodiment.
[FIG. 8] FIG. 8 is a graph illustrating a relationship under predetermined conditions between the osmotic pressure of an aqueous solution of potassium hydroxide and the osmotic pressure of seawater.

### DETAILED DESCRIPTION OF THE INVENTION

Some exemplary embodiments will be described with reference to the drawings. Note that dimensional ratios in the drawings are exaggerated for convenience of the description and are sometimes different from actual ratios.

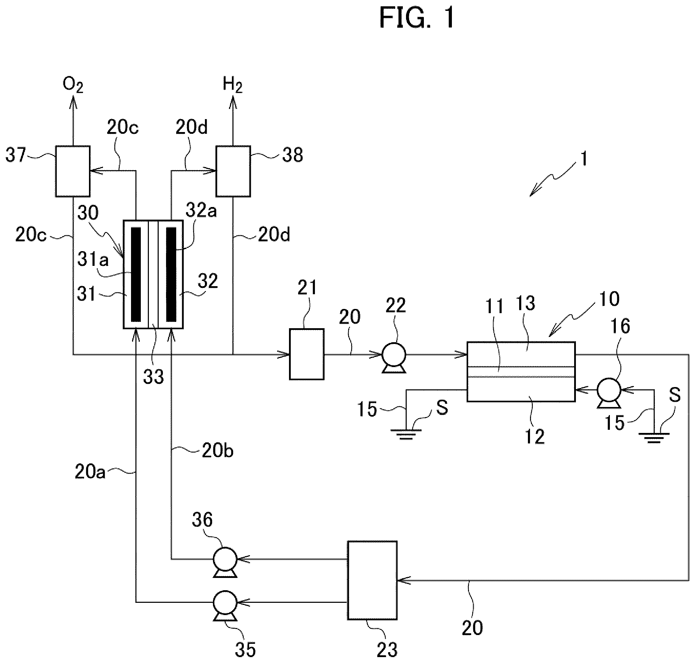

As illustrated in FIG. 1, a hydrogen production system 1 according to the present embodiment includes at least one first osmosis device 10, a circulation flow path 20, and an alkaline water electrolyzer 30.

The first osmosis device 10 includes a semipermeable membrane 11. The first osmosis device 10 includes a first chamber 12 and a second chamber 13, and the semipermeable membrane 11 separates the first chamber 12 and the second chamber 13. Water to be treated is supplied to the first chamber 12. An alkaline aqueous solution having a higher osmotic pressure than that of the water to be treated is supplied to the second chamber 13. One surface of the semipermeable membrane 11 is in contact with the water to be treated in the first chamber 12, and the other surface of the semipermeable membrane 11 is in contact with the alkaline aqueous solution.

The semipermeable membrane 11 allows water in the water to be treated to pass therethrough from the first chamber 12 to the second chamber 13. The osmotic pressure of the alkaline aqueous solution to be supplied to the second chamber 13 is higher than that of the water to be treated. Thus, with a positive osmotic method using the water to be treated as a feed solution (FS) and the alkaline aqueous solution as a draw solution (DS), water in the water to be treated permeates the semipermeable membrane 11 to be supplied to the alkaline aqueous solution having a higher osmotic pressure than that of the water to be treated.

The water to be treated may be seawater, brackish water, or fresh water. Fresh water may be river water, lake water, industrial wastewater, or groundwater. Among these, from the viewpoint that a large amount of water can be supplied, water to be treated is preferably seawater or brackish water.

The alkaline aqueous solution may contain an aqueous solution of an alkali metal hydroxide. The alkali metal hydroxide may contain at least one of sodium hydroxide or potassium hydroxide. The salt concentration of the alkaline aqueous solution may be 4% by mass or more, 20% by mass or more, or 25% by mass or more. The salt concentration of the alkaline aqueous solution may be 35% by mass or less, or 30% by mass or less.

The osmotic pressure of water to be treated that is to be supplied to the first chamber 12 is lower than that of the alkaline aqueous solution to be supplied to the second chamber 13. Thus, the molar concentration of the salt of the water to be treated that is to be supplied to the first chamber 12 may be lower than that of the alkaline aqueous solution to be supplied to the second chamber 13. The larger the difference between the osmotic pressure of the alkaline aqueous solution and the osmotic pressure of the water to be treated, the larger the driving force of the water permeating the semipermeable membrane 11. Thus, the osmotic pressure of the water to be treated that is to be supplied to the first chamber 12 may be less than or equal to the osmotic pressure of seawater. Note that the salt concentration of seawater is, for example, more than 3.0% by mass and 3.8% by mass or less. The salt concentration of brackish water is, for example, 0.05% by mass or more and 3.0% by mass or less. The salt concentration of fresh water is, for example, less than 0.05% by mass. Thus, the salt concentration of the water to be treated that is to be supplied to the first chamber 12 may be 3.8% by mass or less, which is the salt concentration of seawater.

The difference between the osmotic pressure of the water to be treated that is to be supplied to the first chamber 12 and the osmotic pressure of the alkaline aqueous solution to be supplied to the second chamber 13, namely the osmotic pressure difference, preferably exceeds 0.5 MPa. When the osmotic pressure difference exceeds 0.5 MPa, water in the water to be treated easily permeates the semipermeable membrane 11 from the first chamber 12 to the second chamber 13. The osmotic pressure difference more preferably exceeds 4.0 MPa and even more preferably exceeds 7.0 MPa. Since the larger the osmotic pressure difference, the easier it is for water to permeate the semipermeable membrane 11, the upper limit of the osmotic pressure is not particularly limited but may be 20 MPa.

The semipermeable membrane 11 selectively allows water in the water to be treated to pass therethrough. The semipermeable membrane 11 allows water in the water to be treated to pass therethrough, but does not allow sodium ions and the like to pass therethrough. Thus, the semipermeable membrane 11 can prevent contaminants other than water molecules from passing therethrough from the water to be treated to the alkaline aqueous solution. The semipermeable membrane 11 may include at least one selected from the group consisting of a flat membrane, a hollow fiber membrane, and a spiral membrane. The pore size of the semipermeable membrane 11 may be such a size that water molecules pass therethrough but sodium ions and the like in the water to be treated do not pass therethrough. The pore size of the semipermeable membrane 11 may be 0.5 nm or more, or 1 nm or more. The pore size of the semipermeable membrane 11 may be 10 nm or less, 5 nm or less, or 2 nm or less. The semipermeable membrane 11 may be a reverse osmosis membrane (RO membrane). The semipermeable membrane 11 may include at least one selected from the group consisting of cellulose acetate, polyacrylonitrile, polysulfone, polyethersulfone, polyethylene, polypropylene, polyvinylidene fluoride, and ceramic.

The first chamber 12 is connected to the treated water flow path 15. The treated water flow path 15 is provided in such a manner that water to be treated flows therethrough. One end of the treated water flow path 15 is connected to a water source S. The treated water flow path 15 is provided with a pump 16. By driving the pump 16, water to be treated is supplied from the water source S to the first chamber 12 through the treated water flow path 15. Water that has passed through the first chamber 12 may be discharged to the water source S through the treated water flow path 15.

The circulation flow path 20 is connected to the second chamber 13, and an alkaline aqueous solution circulates through the circulation flow path 20. The circulation flow path 20 is provided with the alkaline water electrolyzer 30. The circulation flow path 20 may be provided with a first tank 21, a pump 22, a second tank 23, a pump 35, a pump 36, an oxygen gas-liquid separator 37, and a hydrogen gas-liquid separator 38.

The first tank 21 is provided upstream of the second chamber 13 and downstream of the alkaline water electrolyzer 30 in the circulation flow path 20. An alkaline aqueous solution is stored in the first tank 21. By providing the first tank 21, the amount of the alkaline aqueous solution to be supplied to the second chamber 13 can be adjusted. The alkaline aqueous solution stored in the first tank 21 is supplied to the second chamber 13 using the pump 22. The alkaline aqueous solution that has passed through the second chamber 13 is sent to the second tank 23.

The second tank 23 is provided downstream of the second chamber 13 and upstream of the alkaline water electrolyzer 30 in the circulation flow path 20. An alkaline aqueous solution that has passed through the second chamber 13 is stored in the second tank 23. By providing the second tank 23, the amount of the alkaline aqueous solution to be supplied to the alkaline water electrolyzer 30 can be adjusted.

The alkaline water electrolyzer 30 electrolyzes water in the alkaline aqueous solution supplied from the second chamber 13 to produce hydrogen. The alkaline water electrolyzer 30 includes an anode chamber 31, a cathode chamber 32, and a separation membrane 33. The anode chamber 31 houses an anode 31a. The cathode chamber 32 houses a cathode 32a. The alkaline water electrolyzer 30 includes a DC power supply, which is not illustrated, electrically connected to the anode 31a and the cathode 32a, and electrolyzes water by applying a voltage to the anode 31a and the cathode 32a.

At the anode 31a, oxygen is produced through a reaction as illustrated in reaction formula (1) below.

4OH⁻→O₂+2H₂O+4e⁻ (1)

The anode 31a may include at least one selected from the group consisting of nickel, a nickel cobalt oxide, a nickel alloy, iron, a cobalt oxide, and a noble metal oxide. There are no particular limitations on the shape and size of the anode 31a, and a plate shape, rod shape, or the like can be used depending on the purpose.

At the cathode 32a, hydrogen is produced through a reaction as illustrated in reaction formula (2) below.

2H₂O+2e⁻→H₂+2OH⁻ (2)

The cathode 32a may include at least one of iron or nickel. There are no particular limitations on the shape and size of the cathode 32a, and a plate shape, rod shape, or the like can be used depending on the purpose.

The separation membrane 33 separates the anode chamber 31 and the cathode chamber 32 in such a manner that oxygen gas produced at the anode 31a does not mix with hydrogen gas produced at the cathode 32a. The anode 31a and the separation membrane 33 may be spaced apart, and the cathode 32a and the separation membrane 33 may be spaced apart. The separation membrane 33 is ion-permeable and allows hydroxide ions produced at the cathode 32a to pass therethrough in order to proceed the electrolysis reaction. The separation membrane 33 may be a porous membrane. The separation membrane 33 may include at least one selected from the group consisting of polysulfone, PTFE (polytetrafluoroethylene), asbestos, polyolefin, and an anion exchange membrane (AEM). The anion exchange membrane may be a resin having a quaternary ammonium group and an imidazolium group.

The temperature in the alkaline water electrolyzer 30 is not particularly limited but may be 70 °C or more and 90 °C or less. Note that although an example of the alkaline water electrolyzer 30 as a single tank type has been described in the present embodiment, the alkaline water electrolyzer 30 may be a multi-tank type having two or more tanks.

The circulation flow path 20 may include a flow pass that is connected to an outlet of the second chamber 13 and connected to an inlet of the anode chamber 31 and an inlet of the cathode chamber 32. This allows an alkaline aqueous solution that has passed through the second chamber 13 to be supplied to the anode chamber 31 and the cathode chamber 32, thereby stably maintaining the structure of the separation membrane 33. The circulation flow path 20 branches downstream of the second chamber 13 to be connected to the anode chamber 31 and the cathode chamber 32. Specifically, the circulation flow path 20 includes a first flow path 20a connecting the second tank 23 and the anode chamber 31, and a second flow path 20b connecting the second tank 23 and the cathode chamber 32. The first flow path 20a is provided with the pump 35. The second flow path 20b is provided with the pump 36. An alkaline aqueous solution stored in the second tank 23 is supplied to the anode chamber 31 by driving the pump 35. An alkaline aqueous solution stored in the second tank 23 is supplied to the cathode chamber 32 by driving the pump 36. Note that an alkaline aqueous solution that has passed through the second chamber 13 may be supplied to the anode chamber 31 and the cathode chamber 32 without going through the second tank 23.

With the alkaline water electrolyzer 30, hydrogen can be obtained by electrolyzing water in an alkaline aqueous solution to which water in the water to be treated has been supplied, as described above. Note that in order to use water in the water to be treated as water for electrolysis, a distillation method and a membrane separation method using a reverse osmosis membrane (RO membrane) are known. However, in the distillation method, pure water is produced by boiling water to be treated using fossil fuels. Thus, it is said that 12 to 15 kg/m³ of carbon dioxide is emitted per 1 m³ of water. In the membrane separation method, pure water is produced by pressurizing water to be treated at a pressure higher than or equal to the osmotic pressure, for example, 5 MPa to 7 MPa. Thus, it is said that 2.3 to 3.4 kg/m³ of carbon dioxide is emitted per 1 m³ of water by driving a pressure pump. In contrast, as in the present embodiment, by supplying water for electrolysis using the first osmosis device 10, the boiling and the pressurization for reverse osmosis are not required, and thus the amount of carbon dioxide emissions can be reduced.

An alkaline aqueous solution remaining after electrolysis using the alkaline water electrolyzer 30 is supplied to the semipermeable membrane 11 as an alkaline aqueous solution having a higher osmotic pressure than that of water to be treated. The outlet of the anode chamber 31 may be connected to the inlet of the second chamber 13 of the first osmosis device 10 through the circulation flow path 20. The outlet of the cathode chamber 32 may be connected to the inlet of the second chamber 13 through the circulation flow path 20. A mixture of an alkaline aqueous solution that has passed through the anode chamber 31 and an alkaline aqueous solution that has passed through the cathode chamber 32 may be supplied to the second chamber 13 through the circulation flow path 20.

The circulation flow path 20 may include a third flow path 20c that directs an alkaline aqueous solution from the anode chamber 31 to the first tank 21, and a fourth flow path 20d that directs an alkaline aqueous solution from the cathode chamber 32 to the first tank 21. The third flow path 20c may be provided with an oxygen gas-liquid separator 37. With this, an alkaline aqueous solution that has passed through the anode chamber 31 is supplied to the oxygen gas-liquid separator 37 together with oxygen gas produced at the anode 31a. The fourth flow path 20d may be provided with a hydrogen gas-liquid separator 38. With this, an alkaline aqueous solution that has passed through the cathode chamber 32 is supplied to the hydrogen gas-liquid separator 38 together with hydrogen gas produced at the cathode 32a.

The oxygen gas-liquid separator 37 is connected to the anode chamber 31 and separates the oxygen produced through electrolysis at the anode 31a from the alkaline aqueous solution. The oxygen separated by the oxygen gas-liquid separator 37 may be stored in a storage tank, transported through piping or the like, and used directly in a factory or the like. In contrast, the alkaline aqueous solution separated by the oxygen gas-liquid separator 37 is supplied to the first tank 21.

The hydrogen gas-liquid separator 38 is connected to the cathode chamber 32 and separates the hydrogen produced through electrolysis at the cathode 32a from the alkaline aqueous solution. The hydrogen separated by the hydrogen gas-liquid separator 38 is recovered and used as an energy source. The hydrogen separated by the hydrogen gas-liquid separator 38 may be stored in a storage tank, transported through piping or the like, and used directly as an energy source in a factory or the like. Meanwhile, the alkaline aqueous solution separated by the hydrogen gas-liquid separator 38 is supplied to the first tank 21.

The alkaline aqueous solution separated by the oxygen gas-liquid separator 37 and the alkaline aqueous solution separated by the hydrogen gas-liquid separator 38 are stored in the first tank 21. The alkaline aqueous solution stored in the first tank 21 may be supplied to the second chamber 13 of the first osmosis device 10. Thus, the alkaline aqueous solution to be supplied to the second chamber 13 may include an alkaline aqueous solution separated by the oxygen gas-liquid separator 37 and an alkaline aqueous solution separated by the hydrogen gas-liquid separator 38. Hence, oxygen and hydrogen electrolyzed by the first osmosis device 10 and an alkaline aqueous solution remaining after the electrolysis can be each separated with high accuracy.

An alkaline aqueous solution that has passed through the second chamber 13 is diluted by the addition of water permeating the semipermeable membrane 11. In addition, an alkaline aqueous solution remaining after electrolysis using the alkaline water electrolyzer 30 is concentrated because the water amount is reduced through the electrolysis of water. Thus, the salt concentration of the alkaline aqueous solution in the first tank 21 is higher than that of the alkaline aqueous solution in the second tank 23. Since the osmotic pressure difference between the water to be treated that is to be supplied to the first chamber 12 and the alkaline aqueous solution to be supplied to the second chamber 13 increases, water in the water to be treated passes through the semipermeable membrane 11 from the first chamber 12 to the second chamber 13.

An alkaline aqueous solution remaining after electrolysis using the alkaline water electrolyzer 30 is supplied to the semipermeable membrane 11 as an alkaline aqueous solution having a higher osmotic pressure than that of water to be treated. Note that the alkaline aqueous solution remaining after electrolysis using the alkaline water electrolyzer 30 may be supplied to the second chamber 13 without going through the first tank 21.

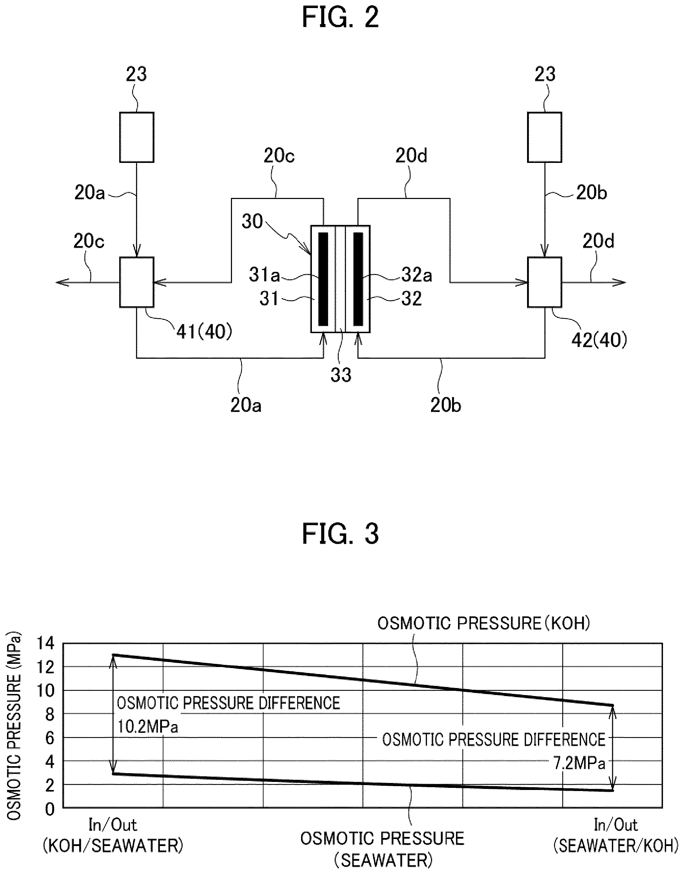

As illustrated in FIG. 2, the hydrogen production system 1 may further include a heat exchanger 40 that exchanges heat of an alkaline aqueous solution to be supplied to the alkaline water electrolyzer 30 with heat of an alkaline aqueous solution discharged from the alkaline water electrolyzer 30. The heat exchanger 40 is provided in the circulation flow path 20. The alkaline water electrolyzer 30 is operated at about 70 to 90 °C, for example. Thus, the energy efficiency of the alkaline water electrolyzer 30 can be improved by exchanging the heat of the alkaline aqueous solution to be supplied to the alkaline water electrolyzer 30 with the heat of the alkaline aqueous solution discharged from the alkaline water electrolyzer 30.

The heat exchanger 40 may include a first heat exchanger 41 and a second heat exchanger 42. The first heat exchanger 41 exchanges heat of an alkaline aqueous solution to be supplied to the anode chamber 31 with heat of an alkaline aqueous solution discharged from the anode chamber 31. The second heat exchanger 42 exchanges heat of an alkaline aqueous solution to be supplied to the cathode chamber 32 with heat of an alkaline aqueous solution discharged from the cathode chamber 32. The first heat exchanger 41 may be connected to the first flow path 20a and the third flow path 20c. The second heat exchanger 42 may be connected to the second flow path 20b and the fourth flow path 20d.

In contrast, the alkaline aqueous solution may be supplied directly to the second chamber 13 without being cooled using the heat exchanger 40 or a cooler. Since the osmotic pressure increases as the temperature increases, when the temperature of the alkaline aqueous solution to be supplied to the second chamber 13 is high, water in the water to be treated can be efficiently supplied to the alkaline aqueous solution. In addition, by exchanging the heat of the alkaline aqueous solution with the heat of the water to be treated in the first osmosis device 10, the alkaline aqueous solution heated by the alkaline water electrolyzer 30 can be cooled.

Next, the osmotic pressure distribution of the water to be treated and the alkaline aqueous solution in the first osmosis device 10 was evaluated. Note that the water to be treated that is to be supplied to the first chamber 12 was seawater having a concentration of 3.5% by mass, and the flow rate of the seawater was set to 10 L/min. The alkaline aqueous solution to be supplied to the second chamber 13 was a KOH (potassium hydroxide) aqueous solution of 30% by mass, and the flow rate of the aqueous solution was set to 10 L/min. Seawater passing through the first chamber 12 was supplied in a counter-current manner relative to the KOH aqueous solution passing through the second chamber 13. In the first osmosis device 10, the temperature of the seawater was set to 15 °C and the temperature of the KOH aqueous solution was set to 20 °C. The salt concentration obtained by finally diluting, in the first osmosis device 10, the KOH aqueous solution of 30% by mass that has been supplied to the second chamber 13 was set to 20% by mass. The results of confirming the osmotic pressure distribution under the above conditions are shown in Table 1 and Fig. 3.

**[Table 1]**

| | | | | | | | | | | | | |
|---|---|---|---|---|---|---|---|---|---|---|---|---|
| KOH aqueous solution | 30 | 29 | 28 | 27 | 26 | 25 | 24 | 23 | 22 | 21 | 20 | mass% |
| | 10 | 10.3 | 10.7 | 11.1 | 11.5 | 12.0 | 12.5 | 13.0 | 13.6 | 14.3 | 15.0 | L/min |
| | 20 | 20 | 20 | 20 | 20 | 20 | 20 | 20 | 20 | 20 | 20 | °C |
| | 13.0 | 12.6 | 12.2 | 11.7 | 11.3 | 10.9 | 10.4 | 10.0 | 9.6 | 9.1 | 8.7 | MPa |
| seawater | 7.0 | 6.5 | 6.1 | 5.7 | 5.4 | 5.0 | 4.7 | 4.4 | 4.1 | 3.8 | 3.5 | mass% |
| | 5.0 | 5.3 | 5.7 | 6.1 | 6.5 | 7.0 | 7.5 | 8.0 | 8.6 | 9.3 | 10 | L/min |
| | 15 | 15 | 15 | 15 | 15 | 15 | 15 | 15 | 15 | 15 | 15 | °C |
| | 2.9 | 2.7 | 2.5 | 2.3 | 2.2 | 2.1 | 1.9 | 1.8 | 1.7 | 1.5 | 1.4 | MPa |
| ΔP | 10.2 | 9.9 | 9.6 | 9.4 | 9.1 | 8.8 | 8.5 | 8.2 | 7.9 | 7.6 | 7.2 | MPa |

In Table 1, the left column of the KOH aqueous solution represents the inlet side (In) of the second chamber 13, and the right column of the KOH aqueous solution represents the outlet side (Out) of the second chamber 13. That is, the KOH aqueous solution has a salt concentration of 30% by mass at the inlet of the second chamber 13, is diluted by the water in seawater being supplied to the second chamber 13, and has a salt concentration of 20% by mass at the outlet of the second chamber 13. The flow rate of the KOH aqueous solution is 10 L/min at the inlet of the second chamber 13, increases by the water in seawater being supplied to the second chamber 13, and is 15.0 L/min at the outlet of the second chamber 13. Accordingly, the osmotic pressure of the KOH aqueous solution is 13.0 MPa at the inlet of the second chamber 13 and 8.7 MPa at the outlet of the second chamber 13.

Meanwhile, the KOH aqueous solution passing through the second chamber 13 is supplied in a counter-current manner relative to the seawater passing through the first chamber 12. Thus, in Table 1, the right column of the seawater indicates the inlet side (In) of the first chamber 12, and the left column of the seawater indicates the outlet side (Out) of the first chamber 12. That is, the seawater has a salt concentration of 3.5% by mass at the inlet of the first chamber 12, is concentrated by supplying water in seawater to the second chamber 13, and has a salt concentration of 7.0% by mass at the outlet of the first chamber 12. The flow rate of the seawater is 10 L/min at the inlet of the first chamber 12, is reduced by supplying water in seawater to the second chamber 13, and is 5.0 L/min at the outlet of the first chamber 12. Accordingly, the osmotic pressure of the seawater is 1.4 MPa at the inlet of the first chamber 12 and 2.9 MPa at the outlet of the first chamber 12.

In the membrane separation method using a reverse osmosis membrane (RO membrane), as described above, pure water is produced by pressurizing water to be treated at a pressure higher than the osmotic pressure such as 5 to 7 MPa. However, from the results of Table 1 and FIG. 3, in the method of the present example, the osmotic pressure difference (ΔP) between the osmotic pressure of the KOH aqueous solution and the osmotic pressure of the seawater exceeded 7 MPa at any position. That is, in the method of the present example, it is evident that by using the semipermeable membrane 11, it is possible to easily supply the water contained in water to be treated to the alkaline aqueous solution through positive osmosis.

As described above, the hydrogen production system 1 and the hydrogen production method according to the present embodiment are capable of producing hydrogen with a reduction in the amount of carbon dioxide emissions compared with the case where the water required for alkaline water electrolysis is produced using the distillation method.

### [Second embodiment]

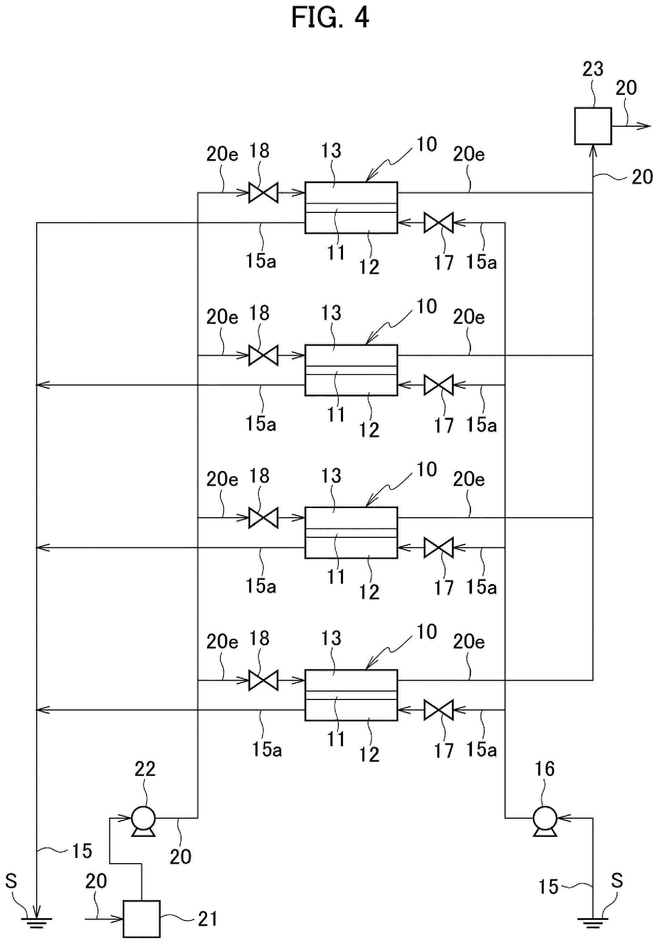

Next, the hydrogen production system 1 and the hydrogen production method according to a second embodiment will be described with reference to FIG. 4. In the hydrogen production system 1 according to the second embodiment, at least one first osmosis device 10 includes multiple first osmosis devices 10. Other points are the same as those of the hydrogen production system 1 and the hydrogen production method according to the above embodiment unless otherwise noted, and thus, the descriptions thereof will be omitted.

Similar to the above embodiment, the hydrogen production system 1 includes the treated water flow path 15 through which water to be treated flows. The treated water flow path 15 includes multiple first parallel flow paths 15a that are branched and arranged in parallel. Each of the multiple first parallel flow paths 15a is provided in such a manner that the water to be treated flows therethrough. The multiple first parallel flow paths 15a are each connected to first chambers 12 of multiple first osmosis devices 10. That is, the multiple first osmosis devices 10 are arranged in parallel. By driving the pump 16, water to be treated is supplied from the water source S to each of the first chambers 12 of the first osmosis devices 10 through the first parallel flow paths 15a. The water to be treated that has passed through each of the first chambers 12 may be discharged to the water source S through the treated water flow path 15.

The circulation flow path 20 includes multiple second parallel flow paths 20e that are branched and arranged in parallel. Each of the multiple second parallel flow paths 20e is provided in such a manner that an alkaline aqueous solution circulates therethrough. The multiple second parallel flow paths 20e are each connected to second chambers 13 of multiple first osmosis devices 10. By driving the pump 22, an alkaline aqueous solution is supplied from the first tank 21 to each of the second chambers 13 of the first osmosis devices 10 through each of the multiple second parallel flow paths 20e. The alkaline aqueous solution that has passed through each of the second chambers 13 may be supplied to the second tank 23 in the same manner as in the above embodiment.

A first stop portion 17 that stops supply of water to be treated to a first chamber 12 is provided upstream of the first chamber 12 in each of the multiple first parallel flow paths 15a. The first stop portion 17 may be a valve, and water to be treated in a first parallel flow path 15a flows by opening the valve and stops by closing the valve. In addition, a second stop portion 18 that stops supply of an alkaline aqueous solution to a second chamber 13 is provided upstream of the second chamber 13 in each of the multiple second parallel flow paths 20e. The second stop portion 18 may be a valve, and an alkaline aqueous solution in a second parallel flow path 20e flows by opening the second stop portion 18 and stops by closing the second stop portion 18.

As described above, in the hydrogen production system 1 according to the present embodiment, at least one first osmosis device 10 includes multiple first osmosis devices 10. The hydrogen production system 1 further includes the treated water flow path 15 through which water to be treated flows. The treated water flow path 15 includes the first parallel flow paths 15a each connected to the first chambers 12 of the first osmosis devices 10 and arranged in parallel. The circulation flow path 20 includes the second parallel flow paths 20e each connected to the second chambers 13 of the first osmosis devices 10 and arranged in parallel. The first stop portion 17 that stops the supply of water to be treated to the first chamber 12 is provided upstream of each of the first chambers 12 in each of the first parallel flow paths 15a. The second stop portion 18 that stops the supply of an alkaline aqueous solution to the second chamber 13 is provided upstream of each of the second chamber 13 in each of the second parallel flow paths 20e.

Thus, by closing a first stop portion 17 and a second stop portion 18, it is possible to stop the operation of one or more of the first osmosis devices 10 among the multiple first osmosis devices 10. Therefore, since an unstopped first osmosis device 10 can be operated, a first osmosis device 10 can be performed maintenance or replaced as necessary without stopping the operation of the entirety of the hydrogen production system 1.

### [Third Embodiment]

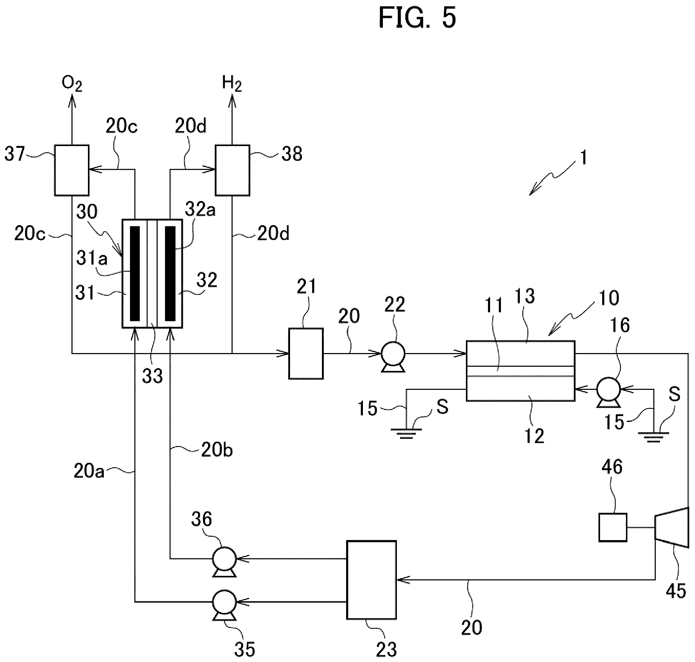

Next, the hydrogen production system 1 and the hydrogen production method according to the third embodiment will be described with reference to FIG. 5. In addition to the configuration of the above embodiments, the hydrogen production system 1 according to the third embodiment further includes a first turbine 45 and a first generator 46. Other points are the same as those of the hydrogen production system 1 and the hydrogen production method according to the above embodiments unless otherwise noted, and thus, the descriptions thereof will be omitted.

The first turbine 45 is provided in the circulation flow path 20 downstream of the second chamber 13 and upstream of the alkaline water electrolyzer 30. Specifically, the first turbine 45 is provided in the circulation flow path 20 downstream of the second chamber 13 and upstream of the second tank 23. The alkaline aqueous solution discharged from the second chamber 13 is supplied to the first turbine 45. The first turbine 45 is rotated using the alkaline aqueous solution supplied from the second chamber 13. The first turbine 45 is mechanically connected to the first generator 46 and is provided so as to operate together with the first generator 46. Thus, the first generator 46 generates electricity by means of rotation of the first turbine 45. The alkaline aqueous solution passing through the first turbine 45 is supplied to the alkaline water electrolyzer 30.

As described above, the hydrogen production system 1 according to the present embodiment further includes the first turbine 45 and the first generator 46. The first turbine 45 is provided downstream of the second chamber 13 and upstream of the alkaline water electrolyzer 30 in the circulation flow path 20, and is rotated using an alkaline aqueous solution supplied from the second chamber 13. The first generator 46 generates electricity by means of rotation of the first turbine 45.

Thus, the hydrogen production system 1 can also generate electricity using concentration difference power generation. Specifically, in the first osmosis device 10, water in the water to be treated permeates from the first chamber 12 to the second chamber 13. Consequently, the flow rate of the alkaline aqueous solution that has passed through the second chamber 13 is higher than that before passing through the second chamber 13. The alkaline aqueous solution that has passed through the second chamber 13 has a water pressure higher than that before passing through the second chamber 13, and can cause the first turbine 45 to be efficiently rotated. Thus, the hydrogen production system 1 and the hydrogen production method according to the present embodiment can produce hydrogen and generate electricity together. The electric power produced through the electricity generation can also be used as a power source for the alkaline water electrolyzer 30.

Note that although an example with one first osmosis device 10 has been described in the present embodiment, the hydrogen production system 1 may include multiple first osmosis devices 10 as in the second embodiment. In this case, first turbines 45 may be each provided downstream of the second chambers 13 and upstream of the alkaline water electrolyzer 30 in the multiple second parallel flow paths 20e, or the first turbine 45 may be provided in the treated water flow path 15 where the multiple second parallel flow paths 20e are joined.

### [Fourth Embodiment]

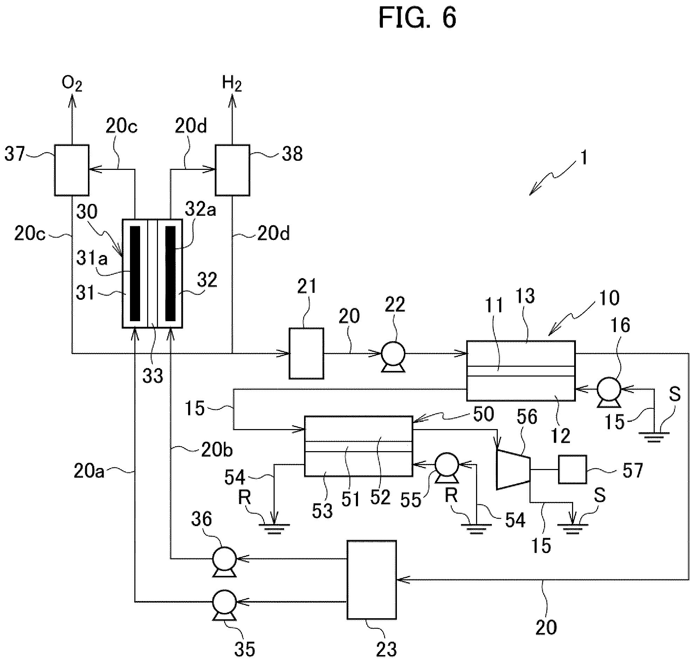

Next, the hydrogen production system 1 and the hydrogen production method according to a fourth embodiment will be described with reference to FIG. 6. In addition to the configuration of the above embodiments, the hydrogen production system 1 according to the fourth embodiment further includes the treated water flow path 15, a second osmosis device 50, a second turbine 56, and a second generator 57. Other points are the same as those of the hydrogen production system 1 and the hydrogen production method according to the above embodiments unless otherwise noted, and the descriptions thereof will be omitted.

The treated water flow path 15 is connected to the first chamber 12. The treated water flow path 15 is provided in such a manner that water to be treated flows therethrough. Specifically, as described above, one end of the treated water flow path 15 is connected to the water source S, and water to be treated pumped from the water source S by the pump 16 flows into the treated water flow path 15.

The second osmosis device 50 includes a semipermeable membrane 51. The second osmosis device 50 includes a third chamber 52 and a fourth chamber 53. The semipermeable membrane 51 separates the third chamber 52 provided downstream of the first chamber 12 in the treated water flow path 15, and the fourth chamber 53 to which low osmotic pressure water having an osmotic pressure less than that of water to be treated is supplied. One surface of the semipermeable membrane 51 is in contact with the water to be treated, and the other surface is in contact with the low osmotic pressure water. The semipermeable membrane 51 may be the same as the semipermeable membrane 11 described above.

The semipermeable membrane 51 allows water in the low osmotic pressure water to pass therethrough from the fourth chamber 53 to the third chamber 52. The osmotic pressure of the water to be treated that is to be supplied to the third chamber 52 is higher than that of the low osmotic pressure water to be supplied to the fourth chamber 53. Thus, the positive osmotic pressure causes the water in the low osmotic pressure water to permeate the semipermeable membrane 51 and to move into water to be treated in the third chamber 52. Consequently, the flow rate of water that has passed through the third chamber 52 is higher than that before passing through the third chamber 52.

The fourth chamber 53 is connected to a flow path 54. One end of the flow path 54 is connected to a river R, which is an example of a water source. The flow path 54 is provided with a pump 55. Freshwater is supplied from the river R to the fourth chamber 53 using the pump 55. Freshwater passing through the fourth chamber 53 may be discharged to the river R.

Note that in the present embodiment, river water is used as the low osmotic pressure water, but it is sufficient for the low osmotic pressure water to be water having an osmotic pressure less than that of the water to be treated that is to be supplied to the third chamber 52. For example, when the water to be treated that is to be supplied to the first chamber 12 is seawater, the low osmotic pressure water to be supplied to the fourth chamber 53 may be seawater. This is because, since water in the seawater supplied to the first chamber 12 permeates the semipermeable membrane 11 to move to the second chamber 13 and thus the seawater that has passed through the first chamber 12 has an increased concentration, the osmotic pressure of the concentrated seawater to be supplied to the third chamber 52 is higher than that of the seawater to be supplied to the fourth chamber 53. With the difference in these osmotic pressures, water in the seawater supplied to the fourth chamber 53 is supplied to the concentrated seawater supplied to the third chamber 52. For the same reason, when the water to be treated that is to be supplied to the first chamber 12 is brackish water, low osmotic pressure water to be supplied to the fourth chamber 53 may be brackish water. That is, the low osmotic pressure water may be the same as the water to be treated and may be seawater, brackish water, or fresh water.

The second turbine 56 is provided in the treated water flow path 15. The second turbine 56 is rotated using water passing through the third chamber 52. The second turbine 56 is mechanically connected to the second generator 57 and is provided so as to operate together with the second generator 57. Thus, the second generator 57 generates electricity by means of rotation of the second turbine 56. The water passing through the second turbine 56 may be discharged to the water source S.

As described above, the hydrogen production system 1 according to the present embodiment further includes the treated water flow path 15, the second osmosis device 50, the second turbine 56, and the second generator 57. The treated water flow path 15 is connected to the first chamber 12, and water to be treated flows therethrough. The second osmosis device 50 separates the third chamber 52 provided downstream of the first chamber 12 in the treated water flow path 15, and the fourth chamber 53 to which low osmotic pressure water having an osmotic pressure less than that of water to be treated is supplied, and includes the semipermeable membrane 51 that allows water in the low osmotic pressure water to pass therethrough from the fourth chamber 53 to the third chamber 52. The second turbine 56 is provided in the treated water flow path 15 and is rotated using the water passing through the third chamber 52. The second generator 57 generates electricity by means of rotation of the second turbine 56.

Thus, the hydrogen production system 1 can also generate electricity through concentration difference power generation. Specifically, in the second osmosis device 50, water in the low osmotic pressure water permeates from the fourth chamber 53 to the third chamber 52. Consequently, the flow rate of water that has passed through the third chamber 52 is higher than that before passing through the third chamber 52. The water passing through the third chamber 52 has a higher water pressure than that before passing through the third chamber 52 and thus can cause the second turbine 56 to efficiently rotate. Thus, the hydrogen production system 1 and the hydrogen production method according to the present embodiment can produce hydrogen and generate electricity together. The electric energy generated through the electricity generation can also be used as a power source for the alkaline water electrolyzer 30.

### [Fifth embodiment]

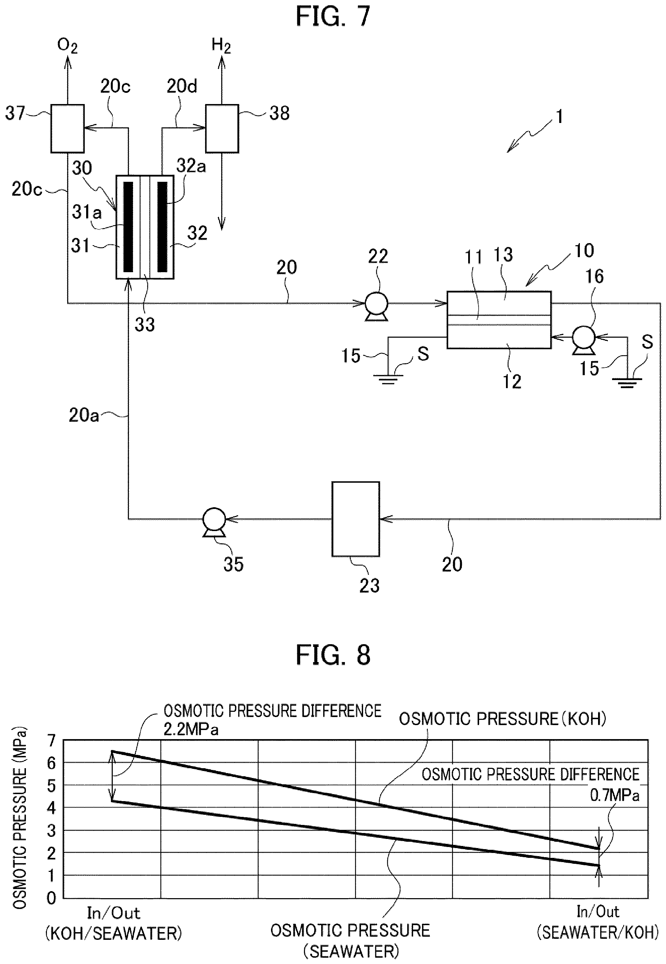

Next, the hydrogen production system 1 and the hydrogen production method according to a fifth embodiment will be described with reference to FIG. 7. In the hydrogen production system 1 according to the fifth embodiment, the alkaline water electrolyzer 30 of an anion exchange membrane type is used. That is, an anion exchange membrane (AEM) such as a resin having a quaternary ammonium group and an imidazolium group is used as the separation membrane 33 of the alkaline water electrolyzer 30. Other points are the same as those of the hydrogen production system 1 and the hydrogen production method according to the above embodiments unless otherwise noted, and thus, the descriptions thereof will be omitted.

In the present embodiment, the circulation flow path 20 may not include the second flow path 20b, and the alkaline aqueous solution that has passed through the second chamber 13 may not be supplied to the cathode chamber 32. Thus, all of the alkaline aqueous solution passing through the second chamber 13 may be supplied to the anode chamber 31. The fourth flow path 20d may not be connected to the first tank 21 or the second chamber 13. Although an alkaline aqueous solution may be supplied to the cathode chamber 32, from the viewpoint of reducing the salt concentration of an alkaline aqueous solution to be supplied to the second chamber 13, the moisture in the cathode chamber 32 is preferably discharged to the outside of the circulation flow path 20.

When the anion-exchange membrane is used as the separation membrane 33, the salt concentration of the alkaline aqueous solution may be as high as 35% by mass, as described above. However, when the anion-exchange membrane is used as the separation membrane 33, the salt concentration of the alkaline aqueous solution may be as low as, for example, 4% by mass or more, or 5% by mass or more. The salt concentration of the alkaline aqueous solution may be 30% by mass or less, 20% by mass or less, or 15% by mass or less.

Next, the osmotic pressure distribution of the water to be treated and the alkaline aqueous solution in the first osmosis device 10 was evaluated. Note that the water to be treated that is to be supplied to the first chamber 12 was seawater having a concentration of 3.5% by mass, and the flow rate of the seawater was set to 30 L/min. The alkaline aqueous solution to be supplied to the second chamber 13 was a KOH (potassium hydroxide) aqueous solution of 15% by mass, and the flow rate of the aqueous solution was set to 10 L/min. Seawater passing through the first chamber 12 was supplied in a counter-current manner relative to the KOH aqueous solution passing through the second chamber 13. In the first osmosis device 10, the temperature of the seawater was set to 15 °C and the temperature of the KOH aqueous solution was set to 20 °C. The salt concentration obtained by finally diluting, in the first osmosis device 10, the KOH aqueous solution of 15% by mass that has been supplied to the second chamber 13 was set to 5% by mass. The results of confirming the osmotic pressure distribution under the above conditions are shown in Table 2 and Fig. 8.

**[Table 2]**

| | | | | | | | | | | | | |
|---|---|---|---|---|---|---|---|---|---|---|---|---|
| KOH aqueous solution | 15 | 14 | 13 | 12 | 11 | 10 | 9 | 8 | 7 | 6 | 5 | mass% |
| | 10.0 | 10.7 | 11.5 | 12.5 | 13.6 | 15.0 | 16.7 | 18.8 | 21.4 | 25.0 | 30.0 | L/min |
| | 20 | 20 | 20 | 20 | 20 | 20 | 20 | 20 | 20 | 20 | 20 | °C |
| | 6.5 | 6.1 | 5.6 | 5.2 | 4.8 | 4.3 | 3.9 | 3.5 | 3.0 | 2.6 | 2.2 | MPa |
| seawater | 10.5 | 9.8 | 9.1 | 8.4 | 7.7 | 7.0 | 6.3 | 5.6 | 4.9 | 4.2 | 3.5 | mass% |
| | 10.0 | 10.7 | 11.5 | 12.5 | 13.6 | 15.0 | 16.7 | 18.8 | 21.4 | 25.0 | 30.0 | L/min |
| | 15 | 15 | 15 | 15 | 15 | 15 | 15 | 15 | 15 | 15 | 15 | °C |
| | 4.3 | 4.0 | 3.7 | 3.4 | 3.2 | 2.9 | 2.6 | 2.3 | 2.0 | 1.7 | 1.4 | MPa |
| ΔP | 2.2 | 2.1 | 1.9 | 1.8 | 1.6 | 1.5 | 1.3 | 1.2 | 1.0 | 0.9 | 0.7 | MPa |

In Table 2, the left column of the KOH aqueous solution represents the inlet side (In) of the second chamber 13, and the right column of the KOH aqueous solution represents the outlet side (Out) of the second chamber 13. That is, the KOH aqueous solution has a salt concentration of 15% by mass at the inlet of the second chamber 13, is diluted by the water in seawater being supplied to the second chamber 13, and has a salt concentration of 5% by mass at the outlet of the second chamber 13. The flow rate of the KOH aqueous solution is 10 L/min at the inlet of the second chamber 13, increases by the water in seawater being supplied to the second chamber 13, and is 30.0 L/min at the outlet of the second chamber 13. Accordingly, the osmotic pressure of the KOH aqueous solution is 6.5 MPa at the inlet of the second chamber 13 and 2.2 MPa at the outlet of the second chamber 13.

Meanwhile, the KOH aqueous solution passing through the second chamber 13 is supplied in a counter-current manner relative to the seawater passing through the first chamber 12. Thus, in Table 2, the right column of the seawater indicates the inlet side (In) of the first chamber 12, and the left column of the seawater indicates the outlet side (Out) of the first chamber 12. That is, the seawater has a salt concentration of 3.5% by mass at the inlet of the first chamber 12, is concentrated by supplying water in seawater to the second chamber 13, and has a salt concentration of 10.5% by mass at the outlet of the first chamber 12. The flow rate of the seawater is 30 L/min at the inlet of the first chamber 12, is reduced by supplying water in seawater to the second chamber 13, and is 10.0 L/min at the outlet of the first chamber 12. Accordingly, the osmotic pressure of the seawater is 1.4 MPa at the inlet of the first chamber 12 and 4.3 MPa at the outlet of the first chamber 12.

From the results of Table 2 and FIG. 8, in the method of the present example, the osmotic pressure difference (ΔP) between the osmotic pressure of the KOH aqueous solution and the osmotic pressure of the seawater exceeded 0.5 MPa at any position. That is, in the method of the present example, it is evident that by using the semipermeable membrane 11, it is possible to easily supply the water contained in water to be treated to the alkaline aqueous solution through positive osmosis.

As described above, the hydrogen production system 1 according to the present embodiment includes at least one first osmosis device 10, the circulation flow path 20, and the alkaline water electrolyzer 30. The at least one first osmosis device 10 includes the semipermeable membrane 11 that separates the first chamber 12 to which water to be treated is supplied and the second chamber 13 to which an alkaline aqueous solution having a higher osmotic pressure than that of the water to be treated is supplied, and that allows water in the water to be treated to permeate from the first chamber 12 to the second chamber 13. The circulation flow path 20 is connected to the second chamber 13, and an alkaline aqueous solution is circulated therethrough. The alkaline water electrolyzer 30 is provided in the circulation flow path 20 and electrolyzes water in the alkaline aqueous solution supplied from the second chamber 13, thereby producing hydrogen.

The hydrogen production method according to the present embodiment includes a step of allowing water in the water to be treated to permeate the semipermeable membrane 11 to be supplied to an alkaline aqueous solution having a higher osmotic pressure than that of the water to be treated. The method includes a step of electrolyzing, using the alkaline water electrolyzer 30, water in the alkaline aqueous solution to which the water in the water to be treated has been supplied, thereby obtaining hydrogen. The method includes a step of supplying an alkaline aqueous solution remaining after electrolysis to the semipermeable membrane 11 as an alkaline aqueous solution having a higher osmotic pressure than that of the water to be treated.

In this way, water in the water to be treated is supplied to an alkaline aqueous solution, and hydrogen can be produced through electrolysis of water in the alkaline aqueous solution. Since the alkaline aqueous solution can be concentrated through electrolysis of the water in the alkaline aqueous solution, the first osmosis device 10 can efficiently recover water in the water to be treated. Thus, in the hydrogen production system 1 and the hydrogen production method according to the present embodiment, compared with the case where the water required for alkaline water electrolysis is produced using the distillation method, hydrogen can be produced with a reduction in the amount of carbon dioxide emissions.

The entire contents of Japanese Patent Application No. 2021-081018 (filed May 12, 2021) are incorporated herein by reference.

Although several embodiments have been described, modifications and variations are possible based on the above-described disclosure. All components of the above embodiments and all features described in the claims may be individually extracted and combined as long as they do not conflict with each other.

The present disclosure can contribute, for example, to goal 7 "Ensure access to affordable, reliable, sustainable and modern energy for all", goal 12 "Ensure sustainable consumption and production patterns", and goal 13 "Take urgent action to combat climate change and its impacts" of the Sustainable Development Goals (SDGs) led by the United Nations.

### REFERENCE SIGNS LIST

- 1: Hydrogen production system
- 10: First osmosis device
- 11: Semipermeable membrane
- 12: First chamber
- 13: Second chamber
- 15: Treated water flow path
- 15a: First parallel flow path
- 17: First stop portion
- 18: Second stop portion
- 20: Circulation flow path
- 20e: Second parallel flow path
- 21: First tank
- 23: Second tank
- 30: Alkaline water electrolyzer
- 31: Anode chamber
- 32: Cathode chamber
- 33: Separation membrane
- 37: Oxygen gas-liquid separator
- 38: Hydrogen gas-liquid separator
- 40: Heat exchanger
- 45: First turbine
- 46: First generator
- 50: Second osmosis device
- 51: Semipermeable membrane
- 52: Third chamber
- 53: Fourth chamber
- 56: Second turbine
- 57: Second generator

## Claims

1. A hydrogen production system, comprising:
at least one first osmosis device including a semipermeable membrane which separates a first chamber to which water to be treated is supplied and a second chamber to which an alkaline aqueous solution having a higher osmotic pressure than that of the water to be treated is supplied, and which permeates water in the water to be treated from the first chamber to the second chamber;
a circulation flow path which is connected to the second chamber and through which the alkaline aqueous solution is circulated; and
an alkaline water electrolyzer that is provided in the circulation flow path, and electrolyzes water in an alkaline aqueous solution supplied from the second chamber and produces hydrogen.

2. The hydrogen production system according to claim 1, wherein the water to be treated is seawater or brackish water.

3. The hydrogen production system according to claim 1 or 2, wherein the alkaline water electrolyzer includes an anode chamber that houses an anode, a cathode chamber that houses a cathode, and a separation membrane that separates the anode chamber and the cathode chamber.

4. The hydrogen production system according to claim 3, wherein the circulation flow path includes a flow path connected to an outlet of the second chamber and to an inlet of the anode chamber and an inlet of the cathode chamber.

5. The hydrogen production system according to claim 3 or 4, further comprising:
an oxygen gas-liquid separator that is connected to the anode chamber and separates oxygen produced through electrolysis at the anode from an alkaline aqueous solution; and
a hydrogen gas-liquid separator that is connected to the cathode chamber and separates hydrogen produced through electrolysis at the cathode from an alkaline aqueous solution, wherein
an alkaline aqueous solution to be supplied to the second chamber includes an alkaline aqueous solution separated by the oxygen gas-liquid separator and an alkaline aqueous solution separated by the hydrogen gas-liquid separator.

6. The hydrogen production system according to any one of claims 1 to 5, further comprising:
a first tank provided upstream of the second chamber and downstream of the alkaline water electrolyzer in the circulation flow path; and
a second tank provided downstream of the second chamber and upstream of the alkaline water electrolyzer in the circulation flow path, wherein
a salt concentration of an alkaline aqueous solution in the first tank is higher than that of an alkaline aqueous solution in the second tank.

7. The hydrogen production system according to any one of claims 1 to 6, further comprising:
a heat exchanger that exchanges heat of an alkaline aqueous solution to be supplied to the alkaline water electrolyzer with heat of an alkaline aqueous solution discharged from the alkaline water electrolyzer.

8. The hydrogen production system according to any one of claims 1 to 7, wherein
the at least one first osmosis device includes a plurality of first osmosis devices,
the hydrogen production system further includes a treated water flow path through which the water to be treated flows,
the treated water flow path includes a plurality of first parallel flow paths that are each connected to first chambers of the first osmosis devices and are arranged in parallel,
the circulation flow path includes a plurality of second parallel flow paths that are each connected to second chambers of the first osmosis devices and are arranged in parallel,
a first stop portion is provided upstream of each of the first chambers in each of the plurality of first parallel flow paths, the first stop portion stopping supply of the water to be treated to the first chamber, and
a second stop portion is provided upstream of each of the second chambers in each of the plurality of second parallel flow paths, the second stop portion stopping supply of the alkaline aqueous solution to the second chamber.

9. The hydrogen production system according to any one of claims 1 to 8, further comprising:
a first turbine that is provided downstream of the second chamber and upstream of the alkaline water electrolyzer in the circulation flow path and is rotated using an alkaline aqueous solution supplied from the second chamber; and
a first generator that generates electricity by means of rotation of the first turbine.

10. The hydrogen production system according to any one of claims 1 to 9, further comprising:
a treated water flow path which is connected to the first chamber and through which the water to be treated flows;
a second osmosis device including a semipermeable membrane which separates a third chamber provided downstream of the first chamber in the treated water flow path and a fourth chamber to which low osmotic pressure water having an osmotic pressure less than that of the water to be treated is supplied, and which permeates water in the low osmotic pressure water from the fourth chamber to the third chamber;
a second turbine which is provided in the treated water flow path and is rotated using water passing through the third chamber; and
a second generator which generates electricity by means of rotation of the second turbine.

11. A hydrogen production method, comprising:
a step of allowing water in water to be treated to permeate a semipermeable membrane to be supplied to an alkaline aqueous solution having a higher osmotic pressure than that of the water to be treated;
a step of electrolyzing, by an alkaline water electrolyzer, water in the alkaline aqueous solution to which the water in the water to be treated is supplied, and obtaining hydrogen; and
a step of supplying an alkaline aqueous solution remaining after electrolysis to the semipermeable membrane as an alkaline aqueous solution having a higher osmotic pressure than that of the water to be treated.
